# EUROPÄISCHE PATENTANMELDUNG

(11) **EP 2 151 370 A2**
(43) Veröffentlichungstag der Anmeldung: **10.02.2010**
(21) Anmeldenummer: 09008030.0
(22) Anmeldetag: 19.06.2009
(51) Int. Cl.: B62D 33/02

(54) **Fahrzeugaufbau für Nutzfahrzeuge mit höhenverstellbaren Eckrungen**

(30) Priorität: 31.07.2008 DE 102008035769
(71) Anmelder: Fahrzeugwerk Bernard Krone GmbH, 48480 Spelle (DE)
(72) Erfinder: Menke, Ansgar, 49757 Werlte (DE)
(74) Vertreter: Busse & Busse Patentanwälte

(57) **Zusammenfassung**

Die Erfindung bezieht sich auf einen Fahrzeugaufbau für Nutzfahrzeuge mit einer Stirnwand und einer vorzugsweise Flügeltüren (8,9) umfassenden Rückwand sowie mit einem sich zwischen der Stirnwand und der Rückwand sowie Seitenwänden erstreckenden, an Längsträgern und Querträgern festlegbaren Hubdach, welche auf höhenverstellbaren vorderen und hinteren Eckrungen (11) abgestützt sind, die über Kraftheber (1,2,3,4) und Schubstücke (12) der Eckrungen (11) in unterschiedliche Höhenpositionen überführbar sind. Um einen Fahrzeugaufbau zu haben, bei dem die höhenbewegliche Eckrunge Teile aufweist, die schmutz- und spritzwassergeschützt anzuordnen sind und darüber hinaus der Bedien- und Bauaufwand verringert ist, vorgesehen, dass die Eckrungen (11) jeweils neben dem Schubstück (12) ein Schlüsselelement (13) aufweisen und das Schubstück (12) entlang des Schlüsselelementes (13) höhenbeweglich ist, wobei an dem Schlüsselelement (13) einer innerhalb der Eckrungen (11) gleitverschieblich geführter, gegen ein Herausbewegen aus der Eckrunge gesicherter höhenverstellbarer Schlüssel (17) als Widerlager für das Schubstück (12) arretierbar ist.

## Beschreibung

Die Erfindung bezieht sich auf einen Fahrzeugaufbau für Nutzfahrzeuge mit einer Stirnwand und einer vorzugsweise Flügeltüren umfassenden Rückwand sowie mit einem sich zwischen der Stirnwand und der Rückwand sowie Seitenwänden erstreckenden, an Längsträgern und Querträgern festlegbaren Hubdach, welche auf höhenverstellbaren vorderen und hinteren Eckrungen abgestützt sind, die über Kraftheber und Schubstücke der Eckrungen in unterschiedliche Höhenpositionen überführbar sind.

Fahrzeugaufbauten der vorgenannten Art für unterschiedliche Be- und Entladezwecke mit Hubdächern, sind insbesondere für Sattelauflieger mit Planenaufbauten und Schiebedächern bekannt.

Solche Hubdächer sind insbesondere deshalb von Interesse, da in Europa mit Ausnahme einiger Länder in Süd- und Osteuropa Fahrzeuge nur mit einer maximalen Aufbauhöhe von 4 Metern im Straßenverkehr bewegt werden dürfen. In einigen süd-und osteuropäischen Ländern sind jedoch auch Aufbauhöhen von mehr als 4 Metern zugelassen, beispielsweise in Spanien, wo eine Aufbauhöhe von 4.600 mm zugelassen ist. In diesen Ausnahmeländern können Aufbauten auch in einer Höhe oberhalb von 4.000 mm, d.h. in einem angehobenen Zustand, mit einem Mehr an Laderaum gefahren werden. Um einen Fahrzeugaufbau in einen angehobenen Zustand zu überführen, sind bei bekannten Lösungen aufwändige Hebemittel und Verriegelungselemente vorzusehen. Darüber hinaus ist ein hoher Justieraufwand zu betreiben.

Um unterschiedliche Höhenpositionen der Eckrungen realisieren zu können, haben diese vielfach Schieblinge, die direkt von Krafthebern beaufschlagt sind, die fest mit den Schieblingen verbundene Hubstangen haben. Dabei haben die Kraftheber für die entsprechende Höhenpositionierung zu sorgen, so dass diese exakt anzufahren sind. Damit geht ein erheblicher Bedienaufwand einher.

Sämtliche Teile sind von außen her zugänglich und daher Verschmutzungen und Spritzwasser ausgesetzt.

Es ist Aufgabe der vorliegenden Erfindung, einen Fahrzeugaufbau der eingangs genannten Art zu schaffen, bei dem mit einem relativ geringen Bedien- und Bauaufwand zuverlässig eine angehobene Position des Hubdaches eingestellt werden kann und bei dem die zur Verstellung der Höhenposition erforderlichen Teile geschützt angeordnet sind.

Zur Lösung dieser Aufgabe zeichnet sich der Fahrzeugaufbau der eingangs genannten Art dadurch aus, dass die Eckrungen jeweils neben dem Schubstück ein Schlüsselelement aufweisen und das Schubstück entlang des Schlüsselelementes höhenbeweglich ist, wobei an dem Schlüsselelement ein innerhalb der Eckrunge gleitverschieblich geführter, gegen ein Herausbewegen aus der Eckrunge gesicherter, höhenverstellbarer Schlüssel als Widerlager für das Schubstück arretierbar ist.

Damit ist ein Fahrzeugaufbau zur Verfügung gestellt, bei dem sowohl das Schlüsselelement als auch der entlang des Schlüsselelementes bewegliche und mit diesem arretierbarer Schlüssel als Widerlager für das Schubstück innerhalb der Eckrunge geführt ist, so dass die Eckrunge nur an einer Seite, beispielsweise über einen Schlitz zugänglich, aber ansonsten geschlossen ausgebildet sein kann. Damit sind sämtliche Teile geschützt angeordnet, und zwar nicht nur vor Verschmutzungen und Spritzwasser, sondern sind darüber hinaus durch ein einfaches Überdecken mit einer Seitenplane zollsicher auszubilden. Dabei ist lediglich sicherzustellen, dass zur Höhenverstellung der Schlüssel dieser von dem Schlüsselelement gelöst werden kann, um dann entlang des Schlüsselelementes in eine andere Höhenposition gebracht zu werden.

Die Eckrunge kann dabei derart geschlossen sein, dass von unten nur noch die Schubstange eines Krafthebers einführbar ist und das Schubstück bereichsweise oben aus der Eckrunge herausgeführt wird, ansonsten nur noch der Schlüssel zugänglich ist. Der Kraftheber kann das Schubstück von unten her beaufschlagen und braucht noch nicht einmal mit diesem verbunden sein. So kann er relativ zu diesem beweglich sein, da das Widerlager, das an dem Schlüsselelement zu arretieren ist, so eingestellt werden kann, dass z.B. nach Anfahren einer Maximalhöhe für das Schubstück sich dieses infolge Schwerkraft zum Widerlager zurückbewegt und auf diese sich abstützt. Damit ist mit einem außerordentlich geringen baulichen Aufwand eine exakte Höhenpositionierung des Hubdaches und damit der höhenveränderlichen Eckrunge möglich.

Bevorzugtermaßen ist der Schlüssel derart mit dem Schlüsselloch verbunden, dass dieser innerhalb der Eckrungen in Lochausnehmungen, die übereinander in z.B. einem Rastermaß von 50 mm dort vorgesehen sind, mit entsprechenden Arretieranformungen eindrückbar ist, aber auch z.B. durch eine Klapp- oder Zugbewegung aus diesen herausbewegt werden kann. Dieses Spiel ist innerhalb der Eckrunge vorzusehen, so dass nach Herausbewegen der Arretieranformung aus den Lochausnehmungen der Schlüssel gleitverschieblich in die entsprechenden Höhenpositionen überführbar ist. Gleichwohl umgreift er das Schlüsselelement derart, dass er nicht von diesem gänzlich abgezogen werden kann. Dazu ist er z.B. von unten in die Eckrunge einzuführen und hat z.B. nutenförmige Gleitführungen, die das Schlüssellochblech z.B. an Schlitzen von hinten hintergreifen, so dass er zwar höhenbeweglich gleitverschieblich geführt ist, jedoch nicht gänzlich abgezogen werden kann. Die entsprechende Quererstreckung der Nutenräume ermöglicht ein Eindrücken und ein Herausziehen des Schlüssels aus dem Schlüsselelement derart, dass die Gleitschiebebewegung zur Höheneinstellung möglich ist.

Hinsichtlich weiterer vorteilhafter Ausgestaltungen der Erfindung wird auf die Ansprüche 2 bis 29 verwiesen.

Weitere vorteilhafte Ausgestaltungen ergeben sich aus der nachfolgenden Beschreibung und der Zeichnung. In der Zeichnung zeigen:
- Fig. 1: ein Ausführungsbeispiel von Krafthebern für die Eckrungen, die als hydraulische Kraftheber ausgebildet sind,
- Fig. 2: in schematischer Ansicht eine Vorderansicht einer Doppelflü- geltür einer Rückwand mit seitlichen Eckrungen,
- Fig. 3: eine Draufsicht auf das Ausführungsbeispiel nach Fig. 2,
- Fig. 4: eine Vorderansicht einer Eckrunge mit zugeordneter Spannstange,

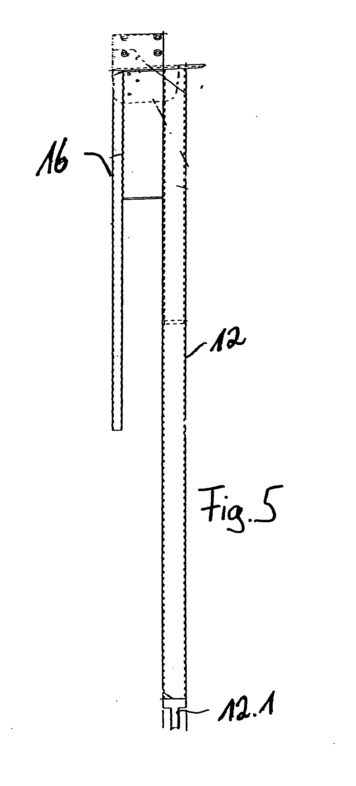

- Fig. 5: ein Ausführungsbeispiel eines Schubstücks einer Eckrunge mit daran befestigtem Schutzblech,
- Fig. 6: ein Ausführungsbeispiel eines Schlüsselelementes einer Eck- runge,

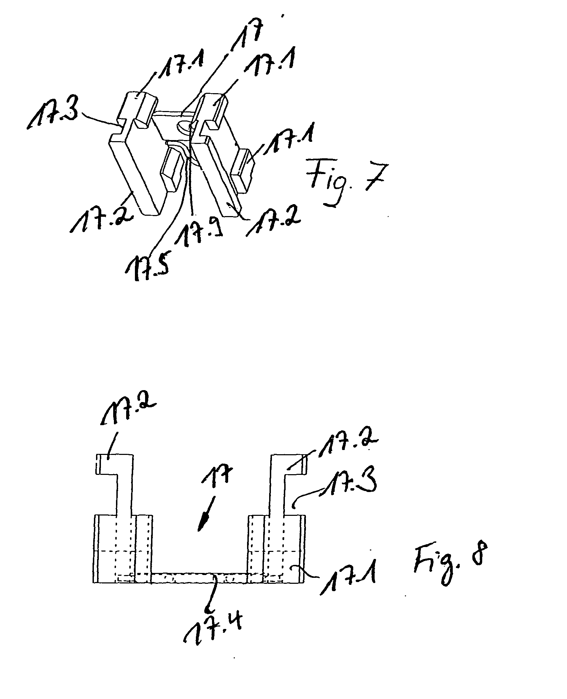

- Fig. 7: in einer perspektivischen Darstellung ein Ausführungsbeispiel eines als Schiebeelement ausgebildeten Schlüssels für das Schlüsselelement,
- Fig. 8: eine Querschnittsdarstellung des Schlüssels nach Fig. 7,

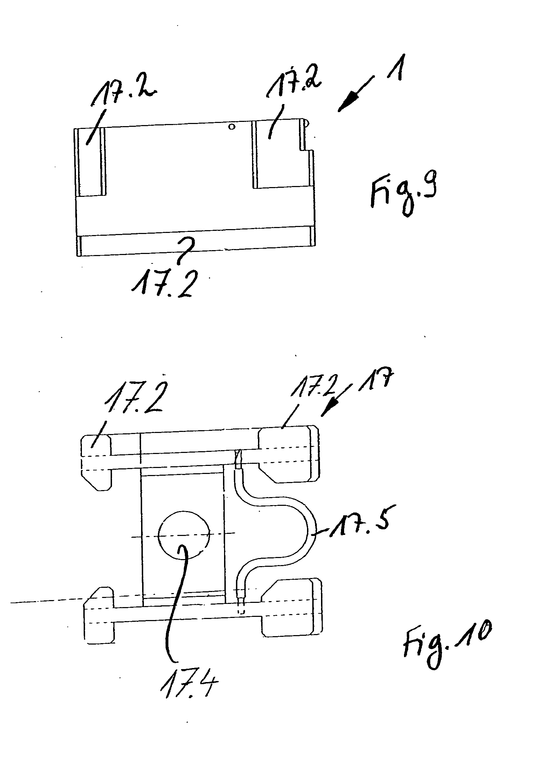

- Fig. 9: eine Seitenansicht des Schlüssels nach Fig. 7 und 8, und
- Fig. 10: eine Draufsicht auf den Schlüssel nach Fig. 7 bis 9,
- Fig. 11: in verschiedenen perspektivischen Ansichten auszugsweise ein Ausführungsbeispiel einer Spannstange,
- Fig. 12: ausschnittsweise eine Draufsicht auf einen hinteren Türflügel mit einem oberen klappbaren Portalbalken,
- Fig. 13: eine Seitenansicht auf das Ausführungsbeispiel nach Fig. 12,
- Fig. 13a: eine Vergrößerung des Details nach Fig. 13,
- Fig. 13b: eine Vergrößerung des Details nach Fig. 13,
- Fig. 14: eine analoge Darstellung zu Fig. 13 bei abgesenktem Portal- balken, der sich in der abgesenkten Position hinter dem Türflü- gel erstrecken
- Fig. 14a: eine Vergrößerung des Details nach Fig. 14;
- Fig. 15: in einer schematisch-perspektivischen Darstellung ein Ausfüh- rungsbeispiel eines Fahrzeugaufbaus;
- Fig. 16: eine Ansicht von hinten auf den Fahrzeugaufbau nach Fig. 15;
- Fig. 17: eine Seitenansicht des Fahrzeugaufbaus nach Fig. 15, und
- Fig. 18: eine Vorderansicht des Fahrzeugaufbaus nach Fig. 15.

In der Zeichnung sind grundsätzlich gleichwirkende Teile mit übereinstimmenden Bezugsziffern versehen.

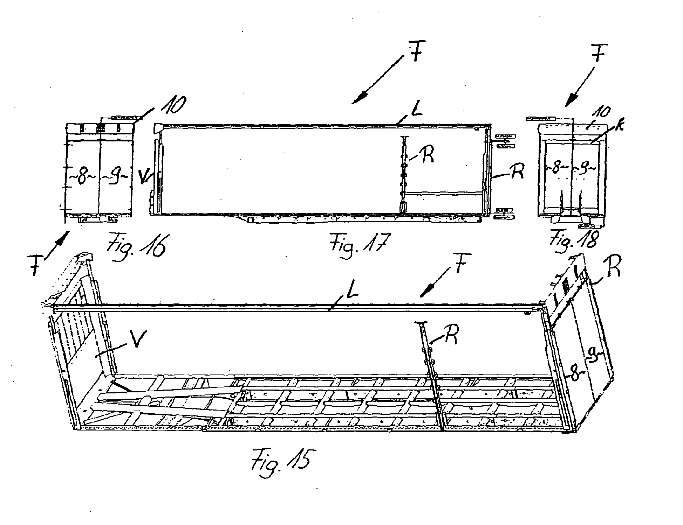

In der Zeichnung ist in den Fig. 15 bis 18 allgemein ein Fahrzeugaufbau F veranschaulicht, der wie herkömmlich ein Fahrgestell haben soll, das über Räder auf dem Erdboden abstützbar ist. Dieser hat eine Rückwand R, die in den meisten Anwendungsfällen eine an den hinteren Eckrungen 11 verschwenkbar abgestützte Türflügel 8, 9 hat. Zusätzlich ist eine Stirnwand S im vorderen Bereich des Fahrzeugaufbaus F vorgesehen. Rückwand R und Stirnwand S sind über obere Längsträger L verbunden, die genauso wie vordere und hintere Querträger 10 an den vorderen beiden Eckrungen 11 wie auch an den hinteren beiden Eckrungen 11 abgestützt sind. Zusätzlich können noch weitere Rungen R vorgesehen sein, z.B. ein oder mehrere mit Abstand voneinander zwischen den vorderen und hinteren Eckrungen angeordnete Seitenrungen.

Oberhalb der Längs- und Querträger L, 10 ist ein nicht dargestelltes Dach vorgesehen, das in dem vorliegenden Ausführungsbeispiel als Hubdach ausgebildet ist. An den Seitenwandbereichen ist in den meisten Anwendungsfällen eine nicht dargestellte Seitenwandplane vorzusehen, die gleitverschieblich gehaltert ist, um das Fahrzeuginnere auch von der Seite her beladen zu können. Ebenfalls ist es möglich, das Hubdach mit einem Schiebedach zu versehen. Im Rahmen der vorliegenden Erfindung geht es darum, das Hubdach in unterschiedlichen Höhenpositionen feststellen zu können, um ein Fahrzeugaufbau zu schaffen, der bedienfreundlich und auf einfache und sichere Weise auf unterschiedliche Aufbauhöhen einzustellen ist.

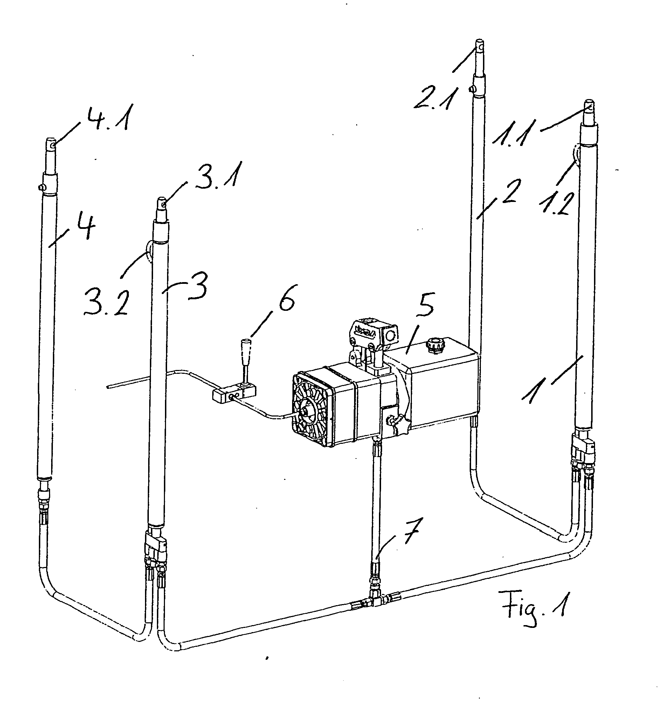

Dazu sind in dem in Fig. 1 gezeigten Ausführungsbeispiel insgesamt vier als Hydraulikzylinder ausgebildete Kraftheber 1, 2, 3 und 4 vorgesehen, die entsprechende Hubstangen 1.1, 2.1, 3.1 und 4.1 aufweisen. Diese werden von einer Pumpe 5 mit einem Hydraulikmedium versehen, wobei nach Aktivierung zunächst über eine Hydraulikleitung 7 die beiden Zylinder 1 und 3 mit dem Hydraulikmedium versehen werden und dann über eine jeweilige Leitung 1.2 und 3.2 die Zylinder 2 und 4 mit dem Hydraulikmedium beaufschlagt werden, so dass die Zylinder 1 und 2 synchron und zum anderen die Zylinder 3 und 4 synchron geschaltet sind. Über einen Hebel 6 sind die Leitungen drucklos zu schalten, so dass dann die Schubstangen 1.1, 2.1, 3.1 und 4.1 selbsttätig ihre eingefahrene Ausgangsposition wieder einnehmen können.

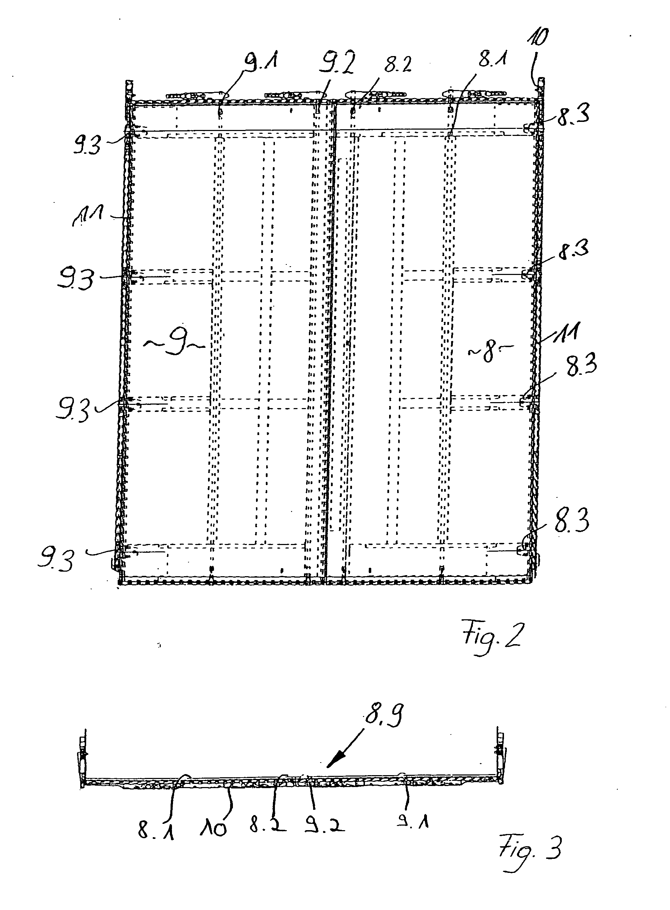

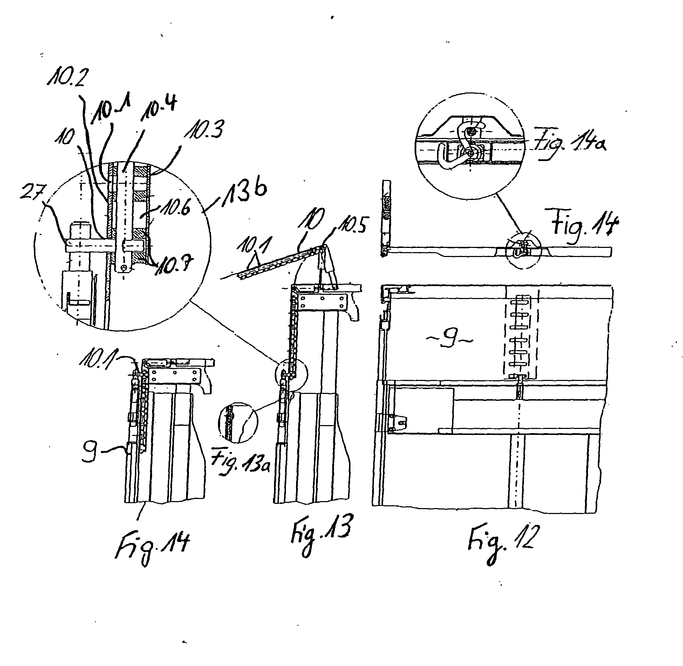

In den Fig. 2 und 3 ist die Rückwand eines Fahrzeugaufbaus nach einem Ausführungsbeispiel gezeigt, die zwei aufschwenkbare Türflügel 8 und 9 aufweist mit entsprechenden Verriegelungsstangen 8.1 und 8.2 bzw. 9.1 und 9.2. Diese Verriegelungsstangen greifen ein in jeweilige Haltestangen eines Portalbalkens 10, der noch näher anhand der Fig. 12, 13 und 14 erläutert werden wird. Die Heckflügeltüren 8 und 9 sind über Scharniere 8.3 bzw. 9.3 an Eckrungen 11 des Fahrzeugaufbaus schwenkbeweglich gehaltert.

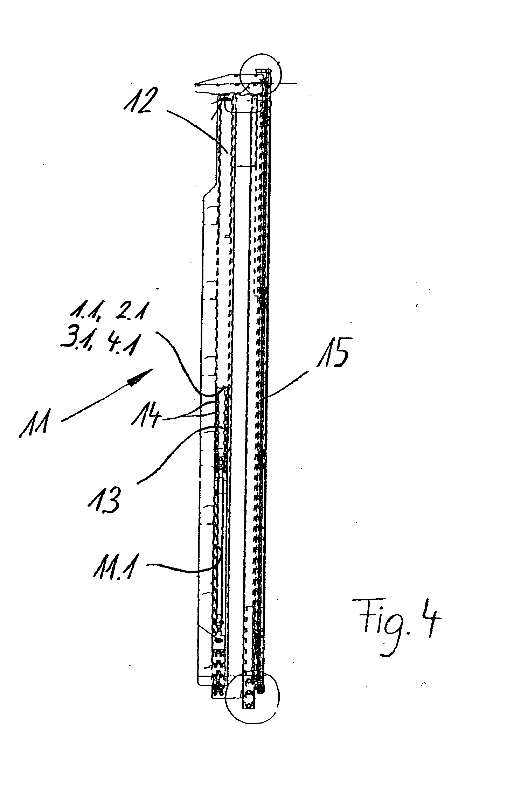

Diese Eckrungen 11 sind höhen- bzw. längenveränderlich ausgebildet, und zwar nach entsprechender Aktivierung der Kraftheber 1, 2, 3 und 4 und Herausfahren der Schubstangen 1.1, 2.1, 3.1 und 4.1. Dazu weist die aus Fig. 4 ersichtliche Eckrunge ein Schubstück 12 auf und ein Schlüsselelement 13, an dem das Schubstück 12 höhenbeweglich entlanggleiten kann.

Wie aus Fig. 4 ersichtlich, hat das Schlüsselelement 13 eine Anzahl von Schlüssellöchern 14, die in der Darstellung nach Fig. 4 teilweise aufgrund der dort eingenommenen Höhenlage verdeckt sind. Das Schubstück 13 ist in der Eckrunge 11 versenkt angeordnet, wozu die Eckrunge 11 eine nuten- bzw. schlitzförmige Öffnung 11.1 hat. Das ansonsten im oberen Bereich der Eckrunge 11 ersichtliche Schubstück 12 ist weitestgehend abgedeckt.

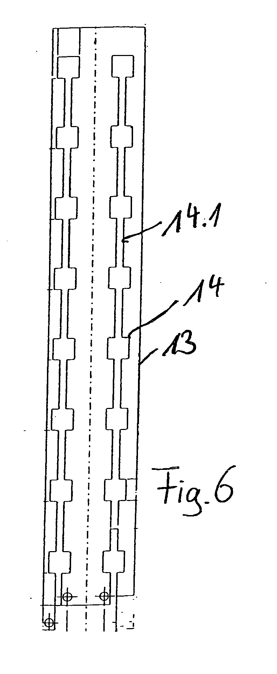

Dem Schubstück 12 ist ein Schlüssel 17 zugeordnet. Dieser hat seitliche abgewinkelte Anformungen 17.2, so dass sich zwischen den Anformungen 17.1 und den Abwinkelungen 17.2 eine nutenförmige Aufnahme 17.3 ergibt. Wie aus Fig. 6 ersichtlich, sind die Schlitze 14.1 des Schlüsselelementes 13 nach unten hin offen, so dass von unten der als Schiebeelement ausgebildeter Schlüssel 17 eingeführt werden kann, wonach er mit seinen Aufnahmen 17.3 die den Schlitzen 14.1 benachbarten Bereiche des Schlüsselelementes 13 aufnimmt. Hat er ein entsprechendes Höhenmaß erreicht, was einer bestimmten Aufbauhöhe entspricht, kann er in die Schlüssellöcher 14 mit seinen Anformungen eingedrückt werden, so dass der Schlüssel 12 in dieser Position arretiert ist. Gelangt das Schubstück 12 infolge seiner Schwerkraft nach Drucklosstellung der Kraftheber in eine abgesenkte Position, kann es sich an dem arretierten Schlüssel 17 als Widerlager abstützen, so dass dies der eingestellten Höhenposition der Eckrunge 11 entspricht. Dies ist auch die eingestellte Höhe des Nutzfahrzeugaufbaus und damit des Hubdaches und des Portalbalkens 10, was noch näher erläutert werden wird. In der arretierten Position kann der Schlüssel 17 zusätzlich noch gesichert werden, z.B. über eine Schraubverbindung, die in das Loch 17.4 eingreift. Um den Schlüssel wieder aus der Arretierung herauszuziehen, ist im dargestellten Ausführungsbeispiel eine Schlaufe 17.5 vorgesehen.

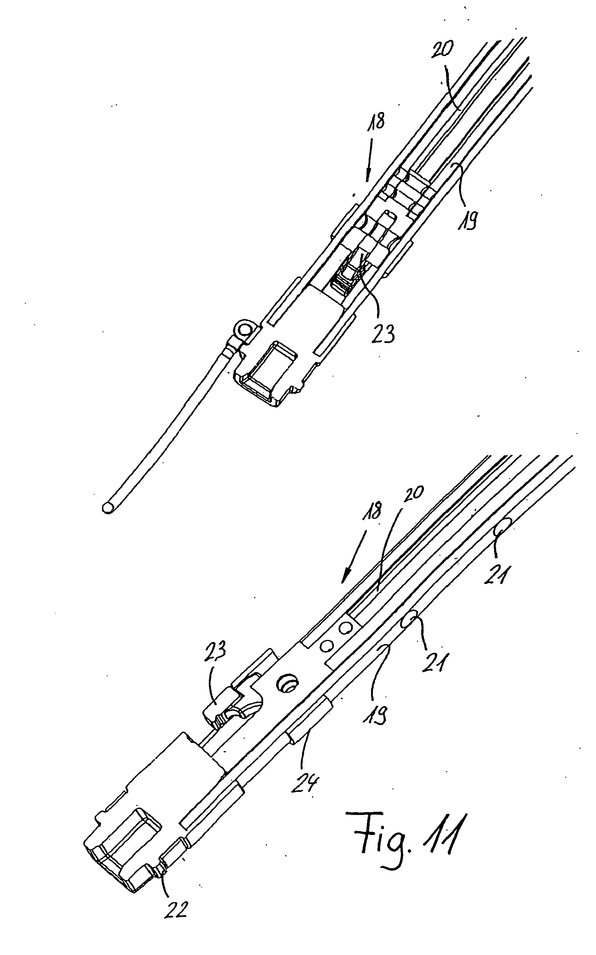

In Fig. 11 ist näher eine allgemein mit 18 bezeichnete Spannstange dargestellt. Diese hat ein Spannstangenrohr 19 und eine innerhalb des Spannstangenrohrs 19 gelegene Spannrolle 20. Die Spannstange 18 hat Bohrungen 21, in die Verriegelungselemente des Spannstangenrohres 19 einzubringen sind. Die Spannrolle 20 ist relativ zu dem Spannstangenrohr 19 zu bewegen. Die Spannstange 18 hat in ihrem unteren Bereich ein Kopfstück 22, das als Vierkant ausgebildet ist, und das in eine entsprechende Vierkantaufnahme des Fahrzeugaufbaus im montierten Zustand der Teile eingeführt ist. Dabei umgreift im übrigen die Seitenwandung eine Eckrunge 11. An der Spannrolle 20 ist ein Hebel 23 vorgesehen, der mit den nicht sichtbaren Verriegelungselement wirkt. Dieser ist einzudrücken und auch herauszubewegen und wird durch einen Sicherungsring 24 gesichert. Nachdem die Spannstange 18 in die Vierkantaufnahme des Fahrzeugaufbaus über das Kopfstück 22 eingesetzt ist, kann die Seitenwandung über die Spannrolle 20 gespannt werden. Das Spannstangenrohr 19 hat dazu eine schlitzförmige Aufnahme, so dass ein entsprechender Keder in die Spannrolle 20 eingeführt werden kann, so dass sämtliche Teile geschützt anzuordnen sind.

Aus den Fig. 12 bis 14 ist näher der Bereich der Rückwand 9 mit dem erfindungsgemäßen Portalbalken 10 ersichtlich, der wie aus Fig. 13 ersichtlich als abgewinkelter Profilkörper ausgebildet ist, der um eine horizontale Achse 10 zu verschwenken ist. Dieser Portalbalken 10 hat verschiedene übereinander angeordnete Verriegelungsaufnahmen 10.1, die von einem Riegelfinger 27 von Türsicherungselementen 8.1, 8.2,9.1, 9.2. zu durchdringen sind. Der Portalbalken 10 selber ist als Kasten ausgebildet mit einer Vorderwandung 10.2 und einer Rückwandung 10.3 und einer inneren Haltestange 10.4, die von dem Riegelfinger 27 umgriffen werden kann. Dadurch, dass dieser schwenkbar ausgebildet ist, kann auch bei erhöhtem Nutzfahrzeugaubau, wie er aus Fig. 13 zu ersehen ist, nach entsprechendem Hochverschwenken des Profilbalkens 10 die ganze Nutzfahrzeughöhe zur Beladung freigegeben werden. Bei abgesenktem Hubdach erstreckt sich der Portalbalken 10 im wesentlichen hinter der Tür 9, wobei dann die obere Aufnahme 10.1 des Portalbalkens 10 von dem Verriegelungsfinger 27 genutzt wird. Im Kasteninneren 10.6 sind Lagerböcke 10.7 vorgesehen, die sich von der Vorderwand 10.2 bis zur Rückwand 10.3 erstrecken und den gesamten Aufbau aussteifen und zudem als Zentrierung für die Verriegelungsfinger 27 dienen.

## Patentansprüche

1. Fahrzeugaufbau für Nutzfahrzeuge mit einer Stirnwand und einer vorzugsweise Flügeltüren (8,9) umfassenden Rückwand sowie mit einem sich zwischen der Stirnwand und der Rückwand sowie Seitenwänden erstreckenden, an Längsträgern und Querträgern festlegbaren Hubdach, welche auf höhenverstellbaren vorderen und hinteren Eckrungen (11) abgestützt sind, die über Kraftheber (1,2,3,4) und Schubstücke (12) der Eckrungen (11) in unterschiedliche Höhenpositionen überführbar sind, **dadurch gekennzeichnet, dass** die Eckrungen (11) jeweils neben dem Schubstück (12) ein Schlüsselelement (13) aufweisen und das Schubstück (12) entlang des Schlüsselelementes (13) höhenbeweglich ist, wobei an dem Schlüsselelement (13) einer innerhalb der Eckrungen (11) gleitverschieblich geführter, gegen ein Herausbewegen aus der Eckrunge gesicherter höhenverstellbarer Schlüssel (17) als Widerlager für das Schubstück (12) arretierbar ist.

2. Fahrzeugaufbau nach Anspruch 1, **dadurch gekennzeichnet, dass** das Schlüsselelement (13) und das Schubstück (12) mitsamt dem Schlüssel (17) innerhalb der Eckrunge (11) angeordnet und nur das Schubstück (12) aus der Eckrunge (11) herausbewegbar ist und eine Schubstange (1.1, 2.1, 3.1, 4.1) eines Krafthebers (1,2,3,4) das Schubstück (12) von unten her beaufschlagt.

3. Fahrzeugaufbau nach Anspruch 1 oder 2, **dadurch gekennzeichnet, dass** die Eckrunge (11) einen Schlitz aufweist, über den der Schlüssel (17) zugänglich ist, ansonsten die Teile innerhalb der Eckrunge (11) verdeckt angeordnet sind.

4. Fahrzeugaufbau nach einem der Ansprüche 1 bis 3, **dadurch gekennzeichnet, dass** der Schlüssel (17) innerhalb der Eckrunge (11) im wesentlichen senkrecht zur Längserstreckung des Schlüsselelementes (13) beweglich und aus Lochausnehmungen (14) des Schlüsselelementes (13) heraus bewegbar und in diese wieder einführbar ist.

5. Fahrzeugaufbau nach einem der Ansprüche 1 bis 4, **dadurch gekennzeichnet, dass** ein aus den Lochausnehmungen (14) heraus bewegte Schlüssel (17) entlang des Schlüsselelementes (13) höhenbeweglich ist zur Einstellung verschiedener Höhenpositionen für das Schubstück (12).

6. Fahrzeugaufbau nach einem der Ansprüche 1 bis 5, **dadurch gekennzeichnet, dass** der Schlüssel (17) als Schiebeelement ausgebildet und in Schlitzführungen (14.1) des Schlüsselelementes (13) höhenbeweglich geführt ist.

7. Fahrzeugaufbau nach Anspruch 5 oder 6, **dadurch gekennzeichnet, dass** der Schlüssel (17) in übereinander angeordnete Lochausnehmungen (14) des Schlüsselelementes (13) einführbar ist.

8. Fahrzeugaufbau nach Anspruch 7, **dadurch gekennzeichnet, dass** der Schlüssel in Lochausnehmungen (14) des Schlüsselelementes (13) einführbare Arretieranformungen (17.2) aufweist.

9. Fahrzeugaufbau nach einem der Ansprüche 6 bis 8, **dadurch gekennzeichnet, dass** der Schlüssel (17) die Schlitzführungen (14.1) des Schlüsselelementes (13) derart umgreift, dass er einerseits höhenbeweglich an diesem geführt ist, aber mit seinen Arretieranformungen (17) aus den Lochausnehmungen (14) heraus bewegbar und frei entlang des Schlüsselelementes (13) höhenbeweglich ist.

10. Fahrzeugaufbau nach einem der Ansprüche 1 bis 9, **dadurch gekennzeichnet, dass** der Schlüssel (17) mittels einer Handschlaufe (17.5) von dem Schlüsselelement (13) lösbar ist.

11. Fahrzeugaufbau nach einem der Ansprüche 1 bis 10, **dadurch gekennzeichnet, dass** das innere Schubstück (12) ein mit Abstand zu diesem angeordnetes Schutzblech (16) aufweist, das mit dem Schubstück (12) höhenverstellbar ist und bei einer Höhenverstellung das Höhenverstellmaß überdeckt.

12. Fahrzeugaufbau nach Anspruch 11, **dadurch gekennzeichnet, dass** das Schutzblech (16) eine Längenerstreckung hat, die der maximalen Höhenverstellung der Eckrunge (11) entspricht.

13. Fahrzeugaufbau nach einem der Ansprüche 1 bis 12, **dadurch gekennzeichnet, dass** die als flexibel ausgebildeten Seitenwände in Spannstangen (18) festlegbar sind, die längenveränderlich ausgebildet sind.

14. Fahrzeugaufbau nach Anspruch 13, **dadurch gekennzeichnet, dass** eine Spannstange (18) eine in einem Spannstangenrohr (17) geführte Spannrolle (20) aufweist und die Spannrolle (20) mit dem Spannstangenrohr (19) in unterschiedlichen Längenpositionen durch einen Riegel verdrehgesichert arretierbar ist.

15. Fahrzeugaufbau nach Anspruch 14, **dadurch gekennzeichnet, dass** das Spannstangenrohr (19) Bohrungen (21) aufweist, in das ein bewegliches Verriegelungselement der Spannrolle (20) als Riegel einführbar ist.

16. Fahrzeugaufbau nach Anspruch 15, **dadurch gekennzeichnet, dass** das Verriegelungselement über einen auf- und abbeweglichen Sicherungsring (24) in der Bohrung (21) arretierbar ist.

17. Fahrzeugaufbau nach Anspruch 15 oder 16, **dadurch gekennzeichnet, dass** das Verriegelungselement mittels eines klappbaren Hebels (23) in die Bohrung (21) einführbar und aus dieser wieder herausbringbar ist.

18. Fahrzeugaufbau nach einem der Ansprüche 15 bis 17, **dadurch gekennzeichnet, dass** die Spannrolle (20) eine Schlitzführung zur Aufnahme eines Keders einer flexiblen Seitenwand aufweist.

19. Fahrzeugaufbau nach einem der Ansprüche 14 bis 18, **dadurch gekennzeichnet, dass** die Spannstange (18) einenends ein als Vierkant ausgebildetes Kopfstück (22) hat, das in eine entsprechende Vierkantaufnahme der Fahrzeugaufbaus einführbar ist.

20. Fahrzeugaufbau nach einem der Ansprüche 14 bis 19, **dadurch gekennzeichnet, dass** an der Spannstange (18) ein Schlaufenelement angreift, um die Spannstange (18) aus der Vierkantaufnahme des Fahrzeugaufbaus herauszuheben.

21. Fahrzeugaufbau nach einem der Ansprüche 1 bis 20, **dadurch gekennzeichnet, dass** im geschlossenen Zustand des Fahrzeugaufbaus die Seitenwand eine Eckrunge (11) übergreift.

22. Fahrzeugaufbau nach einem der Ansprüche 1 bis 21 mit eine Rückwand, die Türflügel aufweist, **dadurch gekennzeichnet, dass** die Rückwand einen diese nach oben hin abschließenden, klappbaren, einen Türanschlag und eine Türverriegelung in unterschiedlichen Höhenpositionen der Eckrunge (11) ausbildenden winkelförmigen Portalbalken (10) aufweist, wobei der Türflügel (8, 9) wenigstens ein Türsicherungselement hat, das einen verschwenkbaren Riegelfinger (27) aufweist, wobei der Riegelfinger (27) zur Verriegelung des Türflügels (8, 9) in eine Verriegelungsaufnahme (10.1) einführbar ist und der winkelförmige Profilkörper (10) klappbar an einem Querträger befestigt ist sowie im abgeklappten Zustand unmittelbar hinter der Innenseite über die Breite der Türflügel (8, 9) verläuft.

23. Fahrzeugaufbau nach Anspruch 22, **dadurch gekennzeichnet, dass** der winkelförmige Profilkörper (10) in seiner Außenmantelfläche Aussparungen (10.1) für die Verriegelungsfinger (27) hat.

24. Fahrzeugaufbau nach Anspruch 23, **dadurch gekennzeichnet, dass** der Profilbalken (10) als klappbares Kastenelement mit einer dem Fahrzeugbauinneren zugewandten geschlossenen Rückwandung (10.3) ausgebildet ist und seine Aussenwandung (10.2) Aussparungen (10.1) für die Verriegelungsfinger (27) eines Türflügels (8, 9) aufweist und im Kasteninneren (10.6) eine von der Verriegelungsfingern (27) zu umgreifende Haltestange (10.4) vorgesehen ist.

25. Fahrzeugaufbau nach Anspruch 23 oder 24, **dadurch gekennzeichnet, dass** der Portalbalken (10) mit einem Gelenk am Querträger derart gelagert ist, dass es um eine horizontale Achse (10.5) schwenkbar ist.

26. Fahrzeugaufbau nach einem der Ansprüche 23 bis 25, **dadurch gekennzeichnet, dass** eine Verriegelungsstange (10.4) in Lagerböcken (10.7) im Kasteninneren (10.6) mehrfach gelagert ist und das Gegenstück für die Riegelfinger (27) bildet.

27. Fahrzeugaufbau für Nutzfahrzeuge nach einem der Ansprüche 1 bis 26, **dadurch gekennzeichnet, dass** die Kraftheber (1, 2) von zwei Eckrungen (11) und die Kraftheber (3, 4) von zwei anderen Eckrungen (11) nach jeweiliger Aktivierung die beiden Eckrungen (11) in ihre, eine erhöhte, insbesondere maximale Höhenposition überführen und die Eckrungen (11) nach Deaktivierung der Kraftheber (1, 2, 3, 4) infolge Schwerkraft in eine durch ein jeweiliges Widerlager (17) einstellbare Höhenposition absenkbar sind.

28. Fahrzeugaufbau nach einem der Ansprüche 1 bis 27, **dadurch gekennzeichnet, dass** die Kraftheber (1, 2) von zwei vorderen und die Kraftheber (3, 4) von zwei hinteren Eckrungen synchron schaltbar sind.

29. Fahrzeugbau nach einem der Ansprüche 1 bis 28, **dadurch gekennzeichnet, dass** die Kraftheber (1, 2, 3, 4) als Hydraulikzylinder ausgebildet sind und das Hydraulikmedium von einer Hydraulikpumpe (5) einem der Kraftheber (1, 3)einer vorderen und einer hinteren Eckrunge (11) zuleitbar ist, und dem synchron geschalteten zweiten Kraftheber (2, 4) der vorderen Eckrunge (11) bzw. der hinteren Eckrunge (11) das Hydraulikmedium von dem jeweils ersten Kraftheber (1, 3) zugeführt wir
